# EUROPÄISCHE PATENTANMELDUNG

(11) **EP 0 905 439 A2**
(43) Veröffentlichungstag der Anmeldung: **31.03.1999**
(21) Anmeldenummer: 98890271.4
(22) Anmeldetag: 24.09.1998
(51) Int. Cl.: F21Q 3/00, G02B 3/00, G08G 1/095

(54) **Signalgeber mit mehreren Lichtquellen**

(30) Priorität: 24.09.1997 AT 1623/97
(71) Anmelder: SWARCO FUTURIT Verkehrssignalsysteme Ges.m.b.H., 3300 Amstetten (AT)
(72) Erfinder: Silhengst, Franz, Ing., 3004 Ollern (AT)
(74) Vertreter: Patentanwälte BARGER, PISO & PARTNER

(57) **Zusammenfassung**

Signalgeberoptik mit einer Trägerplatte (1) für mehrere Lichtquellen (2), welche Licht in Richtung der optisch wirksamen Bauteile abstrahlen, mit einer Kondensorscheibe (4), welche das Licht der Lichtquellen (2) bündelt und einer Abschlußscheibe (7), welche das Licht nach bestimmten Vorgaben verteilt, wobei die Kondensorscheibe (4) für jede Lichtquelle (2) einen eigenen Kondensor (5) enthält, der einen Großteil iher Lichtstrahlen (3) erfaßt und alle Lichtstrahlen vorzugsweise parallel zueinander ausrichtet, und die Abschlußscheibe (7) außen glatt ist und innen eine aus einer Vielzahl von Einzellinsen bestehende Streuoptik (9) aufweist, deren Anordnung bzw. Muster vorzugsweise wesentlich feinmaschiger, jedoch unabhängig vom und unterschiedlich zum Anordnungsmuster der Kodensorlinsen (5) oder Lichtquellen (2) ist.

## Beschreibung

Die Erfindung betrifft eine Signalgeberoptik mit einer Trägerplatte für mehrere Lichtquellen, welche Licht in Richtung der optisch wirksamen Bauteile abstrahlen, mit einer Kondensorscheibe, welche das Licht der Lichtquellen bündelt, und einer Abschlußscheibe, welche das Licht nach bestimmten Vorgaben verteilt.

Zum Hintergrund des Standes der Technik können beispielsweise folgende Dokumente genannt werden: DE 22 02 372 A1, DE 40 02 520 A1, DE 40 03 807 A1, EP 401 711 A2, EP 523 947 A2, FR 2 128 909 A, FR 2 216 633 A, FR 2 243 484 A, GB 2 066 444 A, US 5 396 406 A, US 5 636 057 A, WO86/02985 A1.

Seitdem es gelungen ist, Leuchtdioden mit hoher Lichtbündelung und Lichtstärke in einer Vielzahl von Farben herzustellen, wurde vesucht, in Verkehrs-Lichtsignalanlagen (Ampeln) die Vorteile der Leuchtdioden gegenüber den üblicherweise verwendeten Glüchlampen, wie Abstrahlung eines gerichteten Lichtbündels, wesentlich höhere Lebensdauer und sehr günstiges Energieverhältnis bei farbigem Licht, sowie durch Entfall des Reflektors geringeres Phantomlicht (Vortäuschung eines eingeschalteten Signallichts durch einfallendes Sonnenlicht) umzusetzen. Hierbei wird in die Signalkammer eine zumeist ebene Scheibe anstelle der bisherigen Optik eingesetzt, welche oft als Leiterplatte ausgeführt und mit einer integrierten Spannungsversorgung versehen ist. Diese Platte ist mit einer ausreichenden Zahl einzelner Leuchtdioden in der passenden Lichtfarbe, vorzugsweise gleichmäßig über die gesamte Fläche verteile, bestückt. Die Leuchtdioden senden ihr Licht je nach Bauweise auf unterschiedliche Weise zum Betrachter. Ein weiterer Vorteil ist die geringere Bautiefe, welche neue Gestaltungsmöglickeiten erlaubt.

Diesen Vorteilen stehen jedoch auch einige Nachteile gegenüber, weshalb sich Signalgeber dieser Bauart noch nicht durchgesetzt haben. Einerseits ist eine erhebliche Anzahl von Leuchtdioden notwendig, um vergleichbare Lichtstärken gegenüber Glühlampen zu erzielen. Dadurch sind die Leuchtdioden-Optiken in der Anschaffung wesentlich teurer, lediglich in Betrieb und Wartung billiger als herkömmliche Optiken.

Anderseits ist das Erscheinungsbild gewöhnungsbedürftig, da die bekannte relativ gleichmäßig strahlende herkömmliche Optik nun in dutzende oder hunderte einzelne, intensiver strahlende Lichtpunkte aufgeteilt wird. Es ergeben sich auch Probleme beim Einsatz von Masken für Pfeile, Ampelmännchen und Symbole.

Weiters werden, um elektrisch günstige Anschlußbedingungen zu erhalten, mehrere Leuchtioden elektrisch in Serie geschaltet. Solche Gruppen werden dann in genügender Anzahl parallel betrieben. Das hat zur Folge, daß bei Ausfall einer einzelnen Leuchtdiode gleich die ganze Gruppe ausfällt, was das Erscheinungsbild besonders beeinträchtigt. Es ist aber unwirtschaftlich, den ganzen Einsatz wegen einer einzelnen ausgefallenen Leuchtdiode zu tauschen.

Weiters ist mit einer technischen Weiterentwicklung zu rechnen, wonach die Leuchtdioden immer lichtstärker werden. So werden immer weniger davon benötigt, wobei dann die Signal fläche aus immer weniger Lichtpunkten mit größerem Abstand voneinander zusammengesetzt ist. Dieses unschöne und unzweckmäßige Erscheinungsbild muß durch zusätzliche optische Maßnahme entschärft werden.

Ein weiterer Nachteil ist die üblicherweise kreissymmetrische Lichtabstrahlung der Leuchtdioden, welche dazu führt, daß ein großer Lichtanteil ungenutzt in irrelevante Bereiche abgestrahlt wird, wenn nicht ebenfalls optische Maßnahmen ergriffen werden.

Weiters haben handelsübliche Leuchtdioden eine oder mehrere vorgegebene Abstrahlcharakteristiken, die in der Regel mit der vorgeschriebenen Lichtverteilung des Signalgebers nicht übereinstimmen. Hierdurch müssen ohne Zusatzoptik oft unverhältnismäßig mehr Stück verwendet werden, nur um in lichtschwachen Bereichen noch ausreichend Licht zu haben.

Schließlich weisen die Leuchtdioden selbst ein immer höheres Phantomlicht auf, da sie in ihrem Inneren zunehmend verspiegelte Flächen enthalten, um den Lichtausstoß zu erhöhen. Bei derzeit bekannten Ausführungen fällt Sonnenlicht mehr oder weniger direkt in die Leuchtdioden ein und verursacht dadurch Phantomlicht.

Diesen Nachteilen wird durch unterschiedliche Ausführungsformen begegnet. So werden Leuchtdioden allein hauptsächlich nur für bestimmte Symbole oder Zeichendarstellung verwendet. Zumeist wird den Leuchtdioden eine Optik vorangestellt, welche die Nachteile vermindern und den optischen Wirkungsgrad erhöhen soll.

Eine bekannte Ausführungsform verwendet engbündelnde Leuchtdioden und setzt eine herkömmliche, vorhandene Streuscheibe davor. Hierbei ist nachteilig, daß engbündelnde Leuchtdioden an sich einen schlechteren optischen Wirkungsgrad aufweisen, welcher nur durch Erhöhung der Anzahl der Leuchtdioden kompensiert werden kann. Die Erkennbarkeit einzelner Leuchtdioden wird jedoch vermindert.

Es sind auch Ausführungen bekannt, wo eine spezielle Scheibe vor die Leuchtdioden gesetzt wird, welche auf ihrer Innenseite von jeder Leuchtdiode eine lichtsammelnde bzw. lichtverteilende Linse bzw. Linsenkombination aufweist. Diese haben einen höheren Lichtwirkungsgrad, aber wieder ein Erscheinungsbild, welches die einzelnen Leuchtdioden deutlich erkennen läßt, mit den oben geschilderten Nachteilen.

Weiters sind Ausführungen bekannt, welche vor den Leuchtdioden eine Linsenplatte angeordnet haben, welche auf der den Leuchtdioden zugewandten Seite für jede Leuchtdiode einen Kondensor zur Lichtsammlung aufweisen, auf der anderen Seite Streulinsen, welche das Licht wunschgemäß verteilen. Aus Reinigungsgründen muß dieser Linsenscheibe eine glatte Abschlußscheibe vorangesetzt werden. Neben den Nachteilen der Erkennbarkeit einzelner Leuchtdioden besteht auch die Notwendigkeit, für jede gewünschte Lichtverteilung eine Linsenscheibe neu zu entwickeln. Auch hat der den Leuchtdioden zugewandte Kondensor keinen besonders guten Lichtwirkungsgrad.

Es sind aber auch Ausführungen bekannt, bei welchen an Stelle der Leuchtdioden die Enden von Lichtleiterarmen eines Lichtleiterbündels sitzen. Diese haben eine ähnliche Lichtabstrahlung, daher sind prinzipiell gleiche Ausführungsformen möglich. Solche Konstruktionen werden vor allem wegen der höheren Lichtstärke, insbesonders bei weißem Licht angewandt, welches sonst nur durch additive Lichtmischung von grünen, roten und blauen Leuchtdioden bzw. Farbumwandlungen erzielbar wäre. Die Ausführung in Lichtleitertechnologie erlaubt auch die Positionierung der herkömmlichen Lampe außerhalb der Singalkammer an einer wartungstechnisch günstigen Stelle.

Auch diese Technologie hat einige ähnliche Nachteile. Neben den hohen Anschaffungskosten kann es ebenso zum Ausfall einzelner Lichtpunkte durch Bruch des Lichtleiters kommen. Auch eine genau den Erfordernissen angepaßte Lichtverteilung der einzelnen Lichtpunkte läßt sich praktisch nicht oder nur mit unverhältnismäßigem Aufwand erzielen. Hinzu kommt der Wartungsaufwand durch den Lampenwechsel.

Ziel der Erfindung ist es, einen Signalgeber in Leuchtdioden-Technologie zu schaffen, der einerseits einen möglichst hohen optischen Wirkungsgrad besitzt, um die Zahl der benötigten Leuchtdioden so gering wie möglich zu halten, der die Erkennbarkeit einzelner Leuchtdioden weitestgehend vermeidet, der ein gewohntes Erscheinungsbild unabhängig von der Zahl der eingesetzten Leuchtdioden bietet und damit den Einsatz von Masken und Symbolen ermöglicht. Er soll effektive Maßnahmen zur Vermeidung von Phantomlicht erlauben. Schließlich soll er kompatibel zur Ausführung in Lichtleitertechnologie sein, bzw. andere Lichtquellen mit ähnlicher Lichtcharakteristik zulassen.

Das wird erfindungsgemäß dadurch gelöst, daß vor den Leuchtdioden eine Kondensorscheibe und eine Abschlußscheibe angeodnet sind, wobei die Kondensorscheibe für jede Lichtquelle einen eigenen Kondensor enthält, der einen Großteil ihrer Lichtstrahlen erfaßt und alle Lichtstrahlen vorzugsweise parallel zueinander ausrichtet, und daß die Abschlußscheibe außen glatt ist und innen eine aus einer Vielzahl von Einzellinsen bestehende Streuoptik aufweist, deren Anordnung bzw. Muster vorzugsweise wesentlich feinmaschiger, jedoch unabhängig vom und unterschiedlich zum Anordnungsmusters der Kondensorlinsen oder Lichtquellen ist.

Weitere Details und Ausführungsformen der Erfindung sind in den Unteransprüchen gekennzeichnet und gehen aus der nachfolgenden Beschreibung und den Zeichnungen hervor.

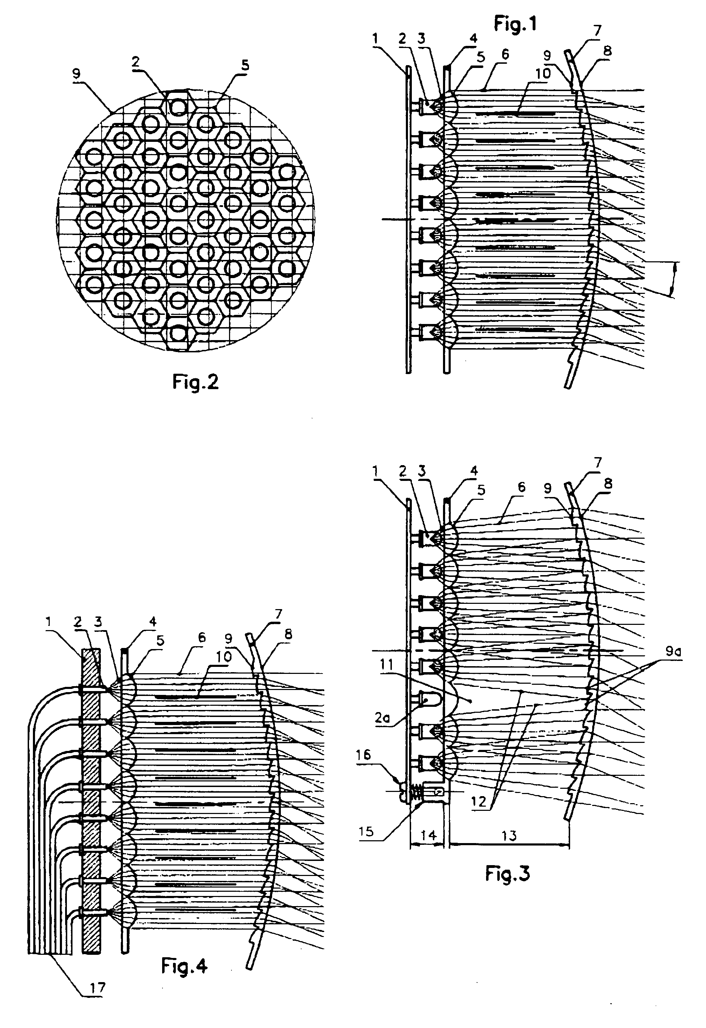

Fig. 1 zeigt eine Ausgestaltung der Erfindung im Schnitt, Fig. 2 eine Draufsicht auf die Signalgeberoptik, Fig. 3 die Kompensation beim Ausfall einer Lichtquelle und Fig. 4 einen Schnitt durch eine Signalgeberoptik in Lichtleitertechnologie.

In Fig. 1 ist die Lichtquellen-Trägerplatte 1 als Leiterplatte mit Leiterbahnen ausgeführt. Die Lichtquellen werden durch Leuchtdioden 2 gebildet, welche in die Leiterplatte 1 eingelötet sind und den größten Teil ihres Nutzlichtes 3 in Richtung der Optik abstrahlen. Unmittelbar davor befindet sich die Kondensorscheibe 4, welche für jede Lichtquelle einen Kondensor 5 besitzt, welcher das Licht 3 der zugehörigen Leuchtdiode 2 bündelt und gegen die Abschlußscheibe 7 lenkt. Dieser Vorgang findet bei allen Leuchtdioden 2 statt und so ergibt sich eine Zone von im wesentlichen parallelem Licht 6 zwischen der Kondensorscheibe 4 und der Abschlußscheibe 7. Die Anordnung von Leiterplatte 1 und Leuchtdioden 2 zusammen mit der Kondensorscheibe 4 ergibt die gleiche Lichtwirkung eines herkömmlichen parabolischen Reflektors, dessen Aufgabe es ist, das Licht einer Lampe parallel zu richten. Das Licht 6 fällt auf die Abschlußscheibe 7, welche es in bekannter Weise nach diversen Vorschriften verteilt.

Wegen der Ähnlichkeit zu einer Reflektor-Optik hat die Abschlußscheibe 7 die gleiche Verteilungsaufgabe wie bisher. Es können daher die gleichen Preß- oder Spritzguß-Werkzeuge wie bereits vorhanden verwendet werden, so daß keine Investitionskosten anfallen. Hierdurch wird auch das Erscheinungsbild nicht verändert. Die Abschlußscheiben 7 können jedoch aus farblosem Material gefertigt werden, da die Leuchtdioden 2 das Licht bereits in der richtigen Farbe abstrahlen. Hierdurch wird auch sogenanntes buntes Phantomlicht verhindert.

In der Zone des parallel gerichteten Lichts 6 können analog der herkömmlichen Reflektor-Optik bekannte phantomlichtsenkende Mittel, wie horizontale Lamellen 10, Waben oder StegKreuze eingebaut werden.

Die Abschlußscheibe 7 hat eine glatte, reinigungsfreundliche Außenseite 8 und eine Streuoptik 9 auf der Innenseite. Fig. 1 zeigt den Schnitt durch eine Optik, welche das Licht ausschließlich horizontal und nach unten lenkt, wodurch der Phantomlicht-Effekt wesentlich reduziert wird. Solche Optiken und deren Wirkung sind ebenfalls bekannt. Sie bestehen üblicherweise aus einem sich über die ganze Fläche wiederholendem Muster einer kleinen, aus wenigen Linsen bestehenden Einheit, welche für sich betrachtet bereits das Licht in die vorgeschriebenen Richtungen im vorgeschriebenen Helligkeitsverhältnis streut. Der Betrachter sieht aus jeder Beobachtungsrichtung nicht die Lichtquellen 2 selbst, sondern nur die Streulinsen 9, welche Licht in seine Richtung lenken. Da diese gleichmäßig über die ganze Fläche der Abschlußscheibe 7 verteilt sind, erscheint dem Betrachter die gesamte Scheibe erleuchtet.

Für diesen Effekt muß an jedem Punkt der Abschlußscheibe 7 Licht auftreffen. Die Kondensorlinsen 5 sind daher so bemessen, daß sie lückenlos aneinanderstoßen und ihre Flächen von den zugehörigen Lichtquellen möglichst vollständig beleuchtet werden.

Fig. 2 zeigt eine hexagonale Anordnung der Kondensorlinsen 5, diese wird der zumeist kreisförmigen Lichtverteilung der zentral dahinterliegenden Lichtquellen 2 am besten gerecht. Die rechteckigen, viel kleineren Linsen 9 der Abschlußscheibe haben ein völlig anderes Rastermaß und machen damit die Anzahl und Anordnung der Kondensorlinsen 5 unkenntlich.

Das visuelle Erscheinungsbild des Signalgebers ist umso besser, je mehr Linsen 9 die Abschlußscheibe 7 aufweist. Da kein unmittelbarer Zusammenhang zwischen der Anzahl der Streulinsen 9 und der Anzahl der Lichtquellen 2 besteht, können jeweils so viele Lichtquellen, wie die Helligkeit erfordert, eingesetzt werden, und jeweils so viele Linsen 9 in der Abschlußscheibe 7 vorhanden sein, wie für einen homogenen Lichteindruck erforderlich. Es ist jedenfalls nur zu bedenken, daß es bei der Überlagerung des Musters der Streulinsen 9 und dem der Kondensorlinsen 5 zu Moiree-Effekten kommen kann, wenn die Rastermaße einander ähnlich sind.

Weil der Betrachter nur die Linsen 9 der Abschlußscheibe 7 sieht, fällt ein Ausfall einer Lichtquelle 2 nicht unmittelbar auf. So können Maßnahmen getroffen werden, den Ausfall weitgehend zu kompensieren.

Fig. 3 zeigt, daß beim Ausfall einer Lichtquelle 2a ein Loch 11 in der Zone parallelen Lichts 6 entstehen und die davon betroffenen Linsen 9a der Abschlußscheibe 7 dunkel erscheinen würden. Um diese Lichtlöcher durch benachbarte Lichtstrahlen 12 zu schließen, empfiehlt sich eine geringe Defokussierung bzw. unscharfe Lichtbündelung aller Kondendorlinsen 5 sowie ein möglichst großer Abstand 13 zwischen Kondensorscheibe 4 und Abschlußscheibe 7. Es ist aber nach optischen Gesetzmäßigkeiten auch bei bester Bündelung immer ein divergenter Lichtanteil, bestimmt durch die Größe der lichtemittierenden Fläche, vorhanden. Die leicht auseinander driftenden Lichtstrahlen überkreuzen sich so nach einer gewissen Distanz und füllen das Licht loch 11 mit zunehmender Entfernung auf. Ebenfalls dargestellt ist eine einfache Vorrichtung 15, mit deren Hilfe der Abstand 14 zwischen Lichtquellen 2 und Kondensorscheibe 4 durch Drehen der Schrauben 16 justiert und damit die Divergenz bzw. Bündelung eingestellt werden kann.

Die überdeckende Wirkung kann auch angewendet werden, um unterschiedliche Helligkeiten der Lichtquellen, Abweichungen in den Licht farben oder in der Abstrahlungsrichtung oder -charakteristik auszugleichen.

Es ist zwischen der Ausfallhäufigkeit der eingesetzten Lichtquellen, dem Einbau phantomlichtbegrenzender Einsätze, dem möglichen Abstand 13 zwischen Kondensorscheibe 4 und Abschlußscheibe 7, den zu kaschierenden Eigenschaftsunterschieden einzelner Lichtquellen sowie dem akzeptablen Grad der Erkennkbarkeit ausgefallender Lichtquellen abzuwägen, wie groß die Divergenz des Lichtbereiches 6 eingestellt werden soll. Eine große Divergenz führt jedoch zu breiterer Lichtverteilung und wirkt sich sehr nachteilig auf die Helligkeit des Signalgebers aus. Deswegen ist einer Vergrößerung des Abstandes 13 der Vorzug zu geben.

In Fig. 1 sind die Kondensorlinsen 5 der Kondensorscheibe 4 auf der den Lichtquellen 2 abgewandten Seite angebracht.

Diese Bauform kann einen sehr großen Bereich der Lichtabstrahlung 3 der Lichtquelle 2 erfassen, ohne in den Grenzbereich zunehmender Oberflächen-Reflexionsverluste des Kondensors 5 bei besonders flach auftreffendem Licht zu gelangen. Sie ergibt deshalb nach den Gesetzen der Optik einen hohen Wirkungsgrad. Würde der Kondensor 5 hierbei sehr dick, so kann er aus technologischen Gründen und wegen der Materialersparnis in bekannter Weise auch als Fresnellinse ausgebildet werden. Das gleiche empfiehlt sich auch für größere Kondensorlinsen bei relativ wenigen Lichtquellen.

Es ist unmittelbar einsichtig, daß die Zahl der Lichtquellen keinen Einfluß auf die Funktion der Optik hat. Lediglich bei Ausfall einer Lichtquelle entsteht ein größeres und damit schwieriger zu schließendes Lichtloch.

Eine weitere Form der Erfindung besteht darin, die Streuoptik 9 der Abschlußscheibe 7 wegzulassen. Hierbei entsteht eine Signalgeberoptik mit höchster Bündelung, etwa für Fernsignale.

Fig. 4 zeigt die gleiche Anordnung wie Fig. 1, jedoch werden die Lichtquellen 2 durch die Enden der Arme eines Faseroptik-Lichtleiters 17 gebildet. Man erkennt die Gleichwertigkeit der Funktion.

Selbstverständlich beschränken sich die Lichtquellen nicht auf Leuchtdioden oder Faseroptik-Arme. Auch jede andere Art von Lichtquellen, die eine ähnliche Abstrahlcharakteristik aufweisen, ist geeignet.

## Patentansprüche

1. Signalgeberoptik mit einer Trägerplatte für mehrere Lichtquellen, welche Licht in Richtung der optisch wirksamen Bauteile abstrahlen, mit einer Kondensorscheibe, welche das Licht der Lichtquellen bündelt und einer Abschlußscheibe, welche das Licht nach bestimmten Vorgaben verteilt, dadurch gekennzeichnet, daß die Kondensorscheibe (4) für jede Lichtquelle (2) einen eigenen Kondensor (5) enthält, der einen Großteil iher Lichtstrahlen (3) erfaßt und alle Lichtstrahlen vorzugsweise parallel zueinander ausrichtet, und daß die Abschlußscheibe (7) außen glatt ist und innen eine aus einer Vielzahl von Einzel linsen bestehende Streuoptik (9) aufweist, deren Anordnung bzw. Muster vorzugsweise wesentlich feinmaschiger, jedoch unabhängig vom und unterschiedlich zum Anordnungsmuster der Kodensorlinsen (5) oder Lichtquellen (2) ist.

2. Signalgeberoptik nach Anspruch 1, dadurch gekennzeichnet, daß die Lichtquellen (2) untereinander gleich und in einer Ebene angeordnet sind.

3. Signalgeberoptik nach Anspruch 1 oder 2, dadurch gekennzeichnet, daß die Kondensorlinsen (5) auf der den Lichtquellen (2) abgewandten Seite der Kondensorscheibe (4) angeordnet sind und die den Lichtquellen (2) zugewandte Seite glatt ist.

4. Signalgeberoptik nach Anspruch 1, 2 oder 3, dadurch gekennzeichnet, daß die Kondensorlinsen (5) in einem Quadrat-, Rechteck-, Rauten- oder Hexagonalraster angeordnet sind.

5. Signalgeberoptik nach einem oder mehreren Ansprüchen 1 bis 4, dadurch gekennzeichnet, daß die Kondensorlinsen (5) lückenkenlos aneinandergrenzen und imwesentlichen vollständig vom Licht der zugehörigen Lichtquellen angestrahlt werden.

6. Signalgeberoptik nach einem oder mehreren Ansprüchen 1 bis 5, dadurch gekennzeichnet, daß die Kodensorlinsen (5) als Fresnellinsen ausgeführt sind.

7. Signalgeberoptik nach einem oder mehreren Ansprüchen 1 bis 6, dadurch gekennzeichnet, daß als Lichtquellen Leuchtdioden (2) vorgesehen sind und deren Trägerplatte als Leiterplatte (1) mit geeigneten Leiterbahnen ausgeführt ist.

8. Signalgeberoptik nach einem oder mehreren Ansprüchen 1 bis 7, dadurch gekennzeichnet, daß die Lichtquellen (2) Enden eines vielarmigen Lichtleiters (17) sind, welche in der Trägerplatte (1) befestigt sind.

9. Signalgeberoptik nach einem oder mehreren Ansprüchen 1 bis 8, dadurch gekennzeichnet, daß zwischen der an der Trägerplatte (1) für die Lichtquellen (2) befestigten Kondensorscheibe (4) und der Abschlußscheibe (7) ein Abstand (13) vorgesehen ist.

10. Signalgeberoptik nach einem oder mehreren Ansprüchen 1 bis 9, dadurch gekennzeichnet, daß die Randstrahlen (12) der durch die jeweils übernächsten Kondensorlinsen (5) divergierenden Lichtstrahlen (6) einander innerhalb des Abstandes (13) zwischen Kondensorscheibe (4) und Abschlußscheibe (7) kreuzen.

11. Signalgeberoptik nach einem oder mehreren Ansprüchen 1 bis 10, dadurch gekennzeichnet, daß eine an Lichtquellenplatte (1) und Kondensorscheibe (4) angreifende Justiervorrichtung (15) zur Einstellung des Abstandes (14) zwischen Kondensorscheibe (4) und Lichtquellenplatte (1) und Justierung oder Veränderung der Lichtbündelung (6) vorgesehen ist.

12. Signalgeberoptik nach einem oder mehreren Ansprüchen 1 bis 11, dadurch gekennzeichnet, daß im Bereich des Abstands (13) zwischen Kondensorscheibe (4) und Abschlußscheibe (7) Vorrichtungen zur Phantomlichtbegrenzung, wie Lamellensätze (10), Waben oder Stegkreuze in dem dort im wesentlichen parallelen Strahlengang (6) angeordnet sind.
